# NEUE EUROPÄISCHE PATENTSCHRIFT

(11) **EP 0 758 667 B2**
(45) Veröffentlichungstag und Bekanntmachung des Hinweises auf die Entscheidung über den Einspruch: **05.12.2007**
(45) Hinweis auf die Patenterteilung: 10.06.1998
(21) Anmeldenummer: 96112612.5
(22) Anmeldetag: 05.08.1996
(51) Int. Cl.: C08J 9/14, C08J 9/20, C08L 25/06

(54) **Verfahren zur Herstellung von expandierbarem Polystyrol**
Process for preparing expandable polystyrene
Procédé pour préparer du polystyrène expansible

(30) Priorität: 14.08.1995 US 514643
(43) Veröffentlichungstag der Anmeldung: 19.02.1997
(73) Patentinhaber: BASF Aktiengesellschaft, 67063 Ludwigshafen (DE)
(72) Erfinder: Scherzer, Dietrich, Dr., 67433 Neustadt (DE); Hahn, Klaus, Dr., 67281 Kirchheim (DE); Schaefer, Anthony, Dr., Hightstown (US); Schmied, Bernhard, Dr., 67227 Frankenthal (DE)

(56) Entgegenhaltungen:
- EP-A- 0 106 129
- EP-A- 0 254 039
- EP-A- 0 405 325
- EP-A- 0 488 019
- EP-A- 0 575 872
- EP-A- 0 612 792
- EP-B- 0 612 792
- WO-A-95/14731
- DE-A- 3 234 660
- US-A- 4 772 441
- US-A- 5 011 863
- US-A- 5 071 882
- Kirk Ottmer " Encyclopedia of Chemical Technology, ( Third Edition) vol.21,(1983), p.789

## Beschreibung

Die Erfindung betrifft ein Verfahren zur Herstellung von periförmigem, expandierbarem Polystyrol durch Polymerisation von Styrol in wäßriger Suspension in Gegenwart von Treibmitteln, Expansionshilfsmitteln und Molekulargewichtsreglern.

Schaumstoffe auf Basis von Styrolpolymerisaten sind seit langem bekannt und sind vielfach in der Literatur beschrieben. Besondere Bedeutung haben hierbei die sogenannten Polystyrolpartikelschäume, die durch Aufschäumung von Treibmittel enthaltenden Polystyrolpartikeln und anschließende Verschweißung dieser geschäumten Partikel zu Blöcken, Formteilen und anderen geschäumten Gegenständen hergestellt werden.

Die Herstellung der Treibmittel enthaltenden, expandierbaren Polystyrolpartikel erfolgt zumeist durch Suspensionspolymerisation. Dabei wird monomeres Styrol in einer wäßrigen Lösung suspendiert und polymerisiert. Das Treibmittel wird meist im Verlauf der Polymerisation zugegeben, es ist jedoch auch möglich, das Treibmittel in einem nachfolgenden Verfahrensschritt den Polystyrolpartikeln zuzusetzen. Bevorzugte Treibmittel sind C₃-C₆-Kohlenwasserstoffe, insbesondere Pentane.

Die Polymerisation des Styrols erfolgt im allgemeinen in Gegenwart von Kettenüberträgern, durch welche das optimale Molekulargewicht eingestellt werden kann. Ein bevorzugter Molekulargewichtsregler ist dimeres α-Methylstyrol.

Technisches Styrol, welchen für die Herstellung des expandierbaren Polystyrols eingesetzt wird, enthält durch den Syntheseprozeß bedingt stets Verunreinigungen in der Größenordnung von etwa 100 bis einigen tausend ppm, insbesondere Ethylbenzol und Cumol. Ähnliches gilt für dimeres α-Methylstyrol, welches in erheblichen Mengen alkylierte Aromaten als Verunreinigungen enthält. Derartige Kohlenwasserstoffe können einerseits als Expansionshilfsmittel wirken und die Expandierbarkeit der Styrolpolymerisate verbessern, andererseits können sie als Weichmacher bei zu hohen Konzentrationen ein unerwünschtes Schrumpfen der expandierten Partikel bewirken, wenn sie nicht aus den Schaumpartikeln ausdiffundieren. Man hat schon versucht, durch Zusatz bestimmter Kohlenwasserstoffe diese Erscheinungen zu beeinflussen, es ist bisher aber noch nicht gelungen, auf reproduzierbare Weise expandierbares Polystyrol mit gleichbleibend guten Eigenschaften, insbesondere hohem Expansionsgrad, kurzen Entformzeiten bei der Formteilherstellung und einer guten Oberflächenqualität der Formteile herzustellen.

Aufgabe der Erfindung war nun, auf einfache Weise diese Ziele zu erreichen.

Diese Aufgabe wird gelöst, wenn vor, während oder nach der Polymerisation des alkylierte Aromaten als Verunreinigungen enthaltenden Styrols in wäßriger Suspension in Gegenwart von 0,05 bis 0,5 Gew-%, bezogen auf Styrol, eines alkylierte Aromaten als Verunreinigungen enthaltenden dimeren α-Methylstyrols zugesetzt werden:
A. 2 bis 8 Gew.-%, bezogen auf Styrol, eines C₃-C₆-Kohlenwasserstoffs mit einem Siedepunkt unterhalb von 70°C als Treibmittel und
B. 0,01 bis 1,0 Gew.-%, bezogen auf Styrol, eines gesättigten Kohlenwasserstoffs mit einem Siedepunkt zwischen 70°C und 300°C als Expansionshilfsmittel,
   wobei man erst den Gehalt des Styrols und des dimeren α-Methylstyrols an verunreinigenden alkylierten Aromaten mit einem Siedepunkt oberhalb von 70°C ermittelt und dann vor, während oder nach der Polymerisation soviel Expansionshilfsmittel B zusetzt, daß der Gesamtgehalt an Expansionshilfsmittel B plus alkylierten Aromaten in der Suspension 0,1 bis 1,5 Gew.-%, bezogen auf Styrol, beträgt.

Das expandierbare Polystyrol wird durch Polymerisation von Styrol, zusammen mit 0,05 bis 0,5 Gew.-%, vorzugsweise 0,08 bis 0,4 Gew.-%, bezogen auf Styrol, eines technischen dimeren α- Methylstyrols, in wäßriger Suspension hergestellt.

Die Suspensionspolymerisation erfolgt in Gegenwart von Suspensionsstabilisatoren und üblicher styrollöslicher Polymerisationskatalysatoren. Als Suspensionsstabilisatoren werden hierbei üblicherweise neben Molekülkolloiden wie Polyvinylalkohol (PVA) und Polyvinylpyrrolidon (PVP) schwerlösliche Salze wie Ca₃(PO₄)₂ (sogenannte Pickering-Salze) in Kombination mit einem Extender wie Dodecylbenzolsulfonat eingesetzt.

Unter Extender werden hierbei Verbindungen verstanden, welche die Fähigkeit der schwerlöslichen anorganischen Verbindungen, Suspensionen zu stabilisieren, erhöhen. Die Extender bewirken eine teilweise Hydrophobierung des an sich hydrophilen anorganischen Pickering-Salzes. Dieses wird somit gezielt in die Oberfläche der polymerisierenden Styroltröpfchen gezwungen.

Bei der Polymerisation werden jener die übliche radikalischen Polymerisationskatalysatoren zugegeben, beispielsweise Dibenzoylperoxid, tert.-Butylperbenzoat oder Dicumylperoxid.

Erfindungsgemäß werden vor, während oder nach der Polymerisation folgende Hilfsstoffe zugesetzt:
A. 2 bis 8 Gew.-%, vorzugsweise 3 bis 5 Gew.-% eines C₃-C₆-Kohlenwasserstoffs mit einem Siedepunkt unterhalb von 70°C als Treibmittel. Geeignete Treibmittel sind z.B. Propan, Butan, Isobutan, n-Pentan, Isopentan, Neopentan, Cyclopentan und Hexan, sowie deren Mischungen. Bevorzugt ist n-Pentan.
B. 0,01 bis 1,0 Gew.-%, vorzugsweise 0,05 bis 0,5 Gew.-%, bezogen auf Styrol, eines gesättigtem Kohlenwasserstoffs mit einem Siedepunkt zwischen 70°C und 300, vorzugsweise zwischen 90 und 300°C und insbesondere zwischen 100 und 170°C. Ist der Siedepunkt sehr niedrig, dann diffundiert - insbesondere bei geringen Mengen- das Expansionshilfsmittel zu schnell aus den expandierbaren Polystyrol-Perlen heraus und die angestrebte hohe Expandierbarkeit wird nicht mehr erreicht. Geeignete Kohlenwasserstoffe sind Heptane, Octane, Nonane, Xylole, Ethylbenzol, Cumol, Ethyltoluol, Cyclohexan sowie Mineralöle und Petroläther. Bevorzugte Expansionshilfsmittel sind gesättigte Kohlenwasserstoffe mit Siedepunkten zwischen 100 und 145°C, insbesondere n-Octan und leichte Mineralöle mit einem Siedebereich von 250 bis 300°C.

Erfindungsgemäß wird erst - zweckmäßigerweise durch Analyse - der Gehalt des monomeren Styrols und des dimeren α-Methylstyrols an verunreinigenden alkylierten Aromaten mit Siedepunkt oberhalb von 70°C ermittelt, dann wird die auf den optimalen Gesamtgehalt errechnete Menge Expansionshilfsmittel zugegeben. Dieser optimale Gesamtgehalt richtet sich nach der Art der Verunreinigungen bzw. des zugesetzten Expansionshilfsmittels sowie nach den angestrebten Eigenschaften (z.B. Expansionsgrad, Schäumungsgeschwindigkeit, Entformbarkeit, Entformzeiten, Oberflächenqualität, mechanische Eigenschaften). Er liegt im allgemeinen zwischen 0,1 und 1,5 Gew.-%, vorzugsweise zwischen 0,15 und 0,5 Gew.-% und insbesondere zwischen 0,15 und 0,3 Gew.%, bezogen auf Styrol. Man kann das Expansionshilfsmittel bereits dem Styrol vor Beginn der Polymerisation zusetzen oder während oder nach der Polymerisation zusammen mit dem Treibmittel.

Die Styrolpolymerisate können auch übliche Zusätze an anderen Stoffen enthalten, die den expandierbaren Produkten bestimmte Eigenschaften verleihen. Genannt seien beispielsweise Flammschutzmittel auf Basis von organischen Brom oder Chlorverbindungen, wie Trisdibrompropylphosphat, Hexabromcyclododecan, Chlorparaffin, sowie Synergisten für Flammschutzmittel, wie Dicumyl und hochzersetzliche organische Peroxide; ferner Antistatika, Stabilisatoren, Farbstoffe, Schmiermittel, Füllstoffe und beim Vorschäumen antiverklebend wirkende Stoffe, wie Zinkstearat, Melaminformaldehydkondensate oder Kieselsäure, sowie Mittel zur Verkürzung der Entformzeit beim Ausschäumen, wie z. B. Glycerinester oder Hydroxycarbonsäureester. Die Zusatzstoffe können je nach der beabsichtigten Wirkung in den Teilchen homogen verteilt oder als Oberflächenbeschichtung vorliegen.

Entsprechend werden die Zusatzstoffe im erfindungsgemäßen Verfahren zugegeben oder anschließend auf die expandierbaren Styrolpolymerisate aufgebracht.

Die im erfindungsgemäßen Verfahren erhaltenen perlförmigen, expandierbaren Styrolpolymerisate werden nach beendeter Polymerisation auf bekannte Weise von der wäßrigen Phase abgetrennt, gewaschen und getrocknet.

Die erfindungsgemäß hergestellten treibmittelhaltigen Styrolpolymerisat-Teilchen haben im allgemeinen einen Durchmesser zwischen 0,2 und 4 mm. Sie können nach üblichen Methoden, z.B. mit Wasserdampf, zu Schaumstoffteilchen mit einem Durchmesser zwischen 0,1 und 2 cm und einer Schüttdichte zwischen 0,005 und 0,1 g/cm³ vorgeschäumt werden.

Die vorgeschäumten Teilchen können dann nach üblichen Verfahren zu Schaumstoff-Formteilen mit einer Dichte von 0,005 bis 0,1 g/cm³ verschäumt werden.

Die erfindungsgemäß hergestellten expandierbaren Polystyrol-Perlen zeichnen sich durch eine gute Verarbeitungskonstanz aus, nämlich durch einen gleichmäßig hohen Expansionsgrad, durch eine gleichmäßig hohe Schäumgeschwindigkeiten sowie gleichmäßig geringe Entformzeiten bei der Formteilherstellung. Außerdem ist die Tendenz zum Verkleben während des Vorschäumprozesses gering und die erhaltenen Schaumstoff-Formteile zeichnen sich durch eine gleichmäßig gute Oberflächenqualität und durch gleichmäßig gute mechanische Eigenschaften aus.

### Beispiele:

In einem druckfesten 50 1 Rührkessel aus rostfreiem Stahl wurde eine Mischung aus 19,5 kg voll entsalztem Wasser 19,5 g Na4P207 und 52,7 g MgSO4 vorgelegt. Hierzu wurden 17 kg Styrol, 17 g Dibenzoylperoxid, 51 g Dicumylperoxid sowie die in der Tabelle angegebene Menge an dimerem α-Methylstyrol (DMS) und n-Octan bzw. ein leichtes Mineralöl mit einem Siedepunkt von etwa 273°C zugegeben. Die Menge an n-Octan bzw. Mineralöl wird dabei jeweils dem Reinheitsgrad der eingesetzten Chargen angepaßt. Die Mischung wurde innerhalb von 2 Std. von 25 auf 100°C und anschließend innerhalb von 5 Std. von 100 auf 130°C erhitzt. Bei 130°C wurde die Mischung für weitere 3 Std. gehalten. Zu der Mischung wurde 55 Min. nach Erreichen einer Temperatur von 80°C, 478 g einer 10 gew.-% wäßrigen Polyvinylpyrrolidon-Lösung (K-Wert:90) und nach weiteren 125 min 0,68 kg n-Pentan (4% bezogen auf Styrol) zugefügt. Die erhaltenen Perlen werden abzentrifugiert, mit kalter Luft getrocknet und mit 0,1 Gew.-%, bezogen auf das Gewicht der unbeschichteten Perlen, Ethylen-bis-stearinsäureamid beschichtet.

Anschließend wurde die Perlgrößenfraktion 0,70-1,00 mm herausgesiebt und mit 0,5 Gew.-%, bezogen auf das Gewicht der Perlen, eines Gemisches aus 40 Gew.-% Citronensäuretristearylester, 50 Gew.-% Glycerinmonostearat und 10 Gew.-% Kieselsäure FK 320 (Fa. Goldschmidt) beschichtet.

Es wurde 10 min in einem drucklosen Schäumkasten (System Rauscher) mittels strömenden Wasserdampf vorgeschäumt. Die so erreichten freien Dichten sind tabellarisch angeben.

Aus der Tabelle ist zu ersetzen, daß es durch gezielten Zusatz des Expansionshilfsmitteln gelingt, die Schüttdichte der erhaltenen Schaumpartikeln (d.h. der Expansionsgrad) konstant zu halten.

**Tabelle**

| Beispiel | Styrol Reinheit in % | Verunreinigungen mit S.P. > 70°C in ppm | DMS Menge in ppm | Verunreinigunen mit S.P. > 70° in ppm | zugesetztes Expansionshilfsmittel in ppm | Schüttdichte g·l⁻¹ |
|---|---|---|---|---|---|---|
| 1 | 99,99 | 100 | 2800 x | 1000 | 3000 O | 21,0 |
| 2 | 99,7 | 3000 | 2800 x | 1000 | 100 O | 20,7 |
| 3 | 99,99 | 100 | 2000 xx | 200 | 3800 O | 21,0 |
| 4 | 99,7 | 3000 | 2000 xx | 200 | 900 O | 20,4 |
| 5 | 99,99 | 100 | 2500 xx | 250 | 3150 M | 19,8 |
| 6 | 99,7 | 3000 | 2500 xx | 250 | 250 M | 19,4 |

| | | | | | | |
|---|---|---|---|---|---|---|
| x DMS ca. 65% rein xx DMS ca. 90% rein O n-Octan M Mineralöl | | | | | | |

## Patentansprüche

1. Verfahren zur Herstellung von perlförmigem, expandierbarem Polystyrol durch Polymerisation von alkylierte Aromaten als Verunreinigungen enthaltendem Styrol in wäßriger Suspension in Gegenwart von Suspensionsstabilisatoren und üblichen styrollöslichen Polymerisationskatalysatoren und von 0,05 bis 0,5 Gew.-%, bezogen auf Styrol, eines alkylierte Aromaten als Verunreinigungen enthaltenden dimeren α-Methylstyrols, wobei der wäßrigen Suspension vor, während oder nach der Polymerisation zugesetzt werden:
A. 2 bis 8 Gew.-%, bezogen auf Styrol, eines C₃-C₆-Kohlenwasserstoffs mit einem Siedepunkt unterhalb von 70°C als Treibmittel und
B. 0,01 bis 1,0 Gew.-%, bezogen auf Styrol, eines gesättigten Kohlenwasserstoffs mit einem Siedepunkt zwischen 70 und 300°C als Expansionshilfsmittel,
**dadurch gekennzeichnet, daß** man erst den Gehalt des Styrols und des dimeren α-Methylstyrols an verunreinigenden alkylierten Aromaten mit einem Siedepunkt oberhalb von 70°C ermittelt und dann vor, während oder nach der Polymerisation soviel Expansionshilfsmittel B zusetzt, daß der Gesamtgehalt an Expansionshilfsmittel B plus alkylierten Aromaten in der Suspension 0,1 bis 1,5 Gew.-%, bezogen auf Styrol, beträgt.

## Claims

1. A process for preparing expandable polystyrene in bead form by polymerizing styrene comprising alkylated aromatic compounds as impurities in aqueous suspension in the presence of suspension stabilizers and customary styrene-soluble polymerization catalysts and from 0.05 to 0.5% by weight, based on styrene, of a dimeric α-methylstyrene comprising alkylated aromatic compounds as impurities, there being added to the aqueous suspension, before, during or after the polymerization:
A. from 2 to 8% by weight, based on styrene, of a C₃-C₆ hydrocarbon having a boiling point below 70°C as blowing agent, and
B. from 0.01 to 1.0% by weight, based on styrene, of a saturated hydrocarbon having a boiling point between 70°C and 300°C as expansion auxiliary,
wherein first of all the content of alkylated aromatic impurities having a boiling point above 70°C in the styrene and the dimeric α-methylstyrene is determined and then, before, during or after the polymerization, sufficient expansion auxiliary B is added that the overall content of expansion auxiliary B plus alkylated aromatic compounds in the suspension is from 0.1 to 1.5% by weight, based on styrene.

## Revendications

1. Procédé de fabrication d'un polystyrène expansible perlé par polymérisation d'aromatiques alkylés sous la forme de polystyrène contenant des impuretés dans une suspension aqueuse en présence de stabilisateurs de la suspension et de catalyseurs habituels de la polymérisation solubles dans le polystyrène et de 0,05 à 0,5% en poids, par rapport au styrène, d'un aromatique alkylé sous la forme d'un α-méthyle-styrène dimère contenant des impuretés, la suspension aqueuse étant mélangée avant, pendant ou après la polymérisation avec :
A. 2 à 8% en poids, par rapport au styrène, d'un carbohydrate en C₃-C₆ avec un point de fusion inférieur à 70°C sous la forme d'un agent gonflant et
B. 0,01 à 1,0% en poids, par rapport au styrène, d'un carbohydrate saturé avec un point de fusion entre 70 et 300°C sous la forme d'un agent d'expansion,
**caractérisé en ce qu'**on obtient tout d'abord une teneur en aromatique alkylé non purifié du styrène et de l'α-méthyle styrène dimère avec un point de fusion supérieur à 70°C, puis **en ce qu'**on ajoute, avant, pendant ou après la polymérisation autant d'agent d'expansion B que nécessaire pour que la proportion totale d'agent d'expansion B plus les aromatiques alkylés atteignent de 0,1 à 1,5% en poids, par rapport au styrène, dans la suspension.
